Europäisches Patentamt

European Patent Office

Office européen des brevets

(19)

(11) Publication number: **0 016 784**
**B1**

(12) **EUROPEAN PATENT SPECIFICATION**

(45) Date of publication of patent specification: **15.02.84**

(51) Int. Cl.³: **F 16 B 1/00, B 32 B 27/36**

(21) Application number: **79900694.5**

(22) Date of filing: **18.06.79**

(86) International application number:
**PCT/US79/00423**

(87) International publication number:
**WO 80/00178 07.02.80 Gazette 80/3**

(54) Method of manufacturing corrosion-resistant impact-driven metal fasteners.

(30) Priority: **26.06.78 US 919433**

(43) Date of publication of application:
**15.10.80 Bulletin 80/21**

(45) Publication of the grant of the patent:
**15.02.84 Bulletin 84/7**

(84) Designated Contracting States:
**DE FR GB**

(56) References cited:
**DE - A - 1 805 199**
**US - A - 2 071 685**
**US - A - 3 164 488**
**US - A - 3 544 656**
**US - A - 3 553 284**
**US - A - 3 671 331**
**US - A - 3 983 304**
**US - A - 4 003 760**
**US - A - 4 074 011**
**US - A - 4 137 368**
**US - A - 4 141 760**
**US - A - 4 143 790**

(73) Proprietor: **DUO-FAST CORPORATION**
**3702 N. River Road**
**Franklin Park, IL 60131 (US)**

(72) Inventor: **KURR, Donald J.**
**379 Anthony Street**
**Glen Ellyn, IL 60137 (US)**

(74) Representative: **Spencer, Graham Easdale et al,**
**A.A. Thornton & CO Northumberland House 303-306, High Holborn**
**London WC1V 7LE (GB)**

(56) References cited:

**Lackkunstharze, Wagner and Sarx, pp. 67 to 69**
**Encyclopedia of Polymer Science and Technology, Volume 2, pp. 61 and 62**

Courier Press, Leamington Spa, England.

# Method of manufacturing corrosion-resistant impact-driven metal fasteners

The present invention is concerned with a method of manufacturing corrosion-resistant impact-driven metal fasteners, such as nails and staples, by applying a corrosion- and impact-resistant coating to a metallic corrosion-resistant undercoating present on the fastener.

A problem inherent in the use of corrosion-resistant coated fasteners, such as zinc-plated nails, is that where they are driven into a workpiece, there is a serious risk of damaging the coating, thus risking accelerated breakdown of the corrosion-resistant coating. In the case of power tool driven nails there is an additional risk of damage to the corrosion-resistant coating when assembling groups of nails in a form suitable for use in power tool applications (collating). Corrosion-resistant (steel) nails damaged when collating undergo premature failure by corrosion of the exposed fastener substrate.

One particularly useful method of imparting corrosion resistance to ferrous substrates, such as nails, is by applying a metal flake, such as zinc flake, using a hexavalent chromium salt in an aqueous dispersion; the metal flake may be applied by immersion and baked to an adherent metallic grey finish. This process (as disclosed in U.S. Patents 3671331, 3687738, 3907608 and 4020220) is known as "Dacrotizing"; such "Dacrotized" nails have corrosion resistance equal to or better than nails submitted to conventional corrosion resistance treatment, such as zinc electroplating, mechanical zinc plating, or hot dip zinc galvanizing with or without subsequent chromate rinse treatment. Since the "Dacrotized" surface is harder than a conventional zinc surface, it is more susceptible to abrasion damage during manufacture or use and it is desirable to minimise such damage.

We have now developed a method of manufacturing corrosion-resistant impact-driven metal fasteners (including such zinc-coated fasteners) by at least partially coating with a polyester coating composition, so as to protect the fastener from damage during collating and/or driving.

Polyester coating compositions are well known per se, examples of such compositions being disclosed in U.S. Patents 2470752, 3108083, 3532767, 3553284, 3544656, 3563372, 3600459, 3660327, 3668275, 3842021, 3852375, 3928492 and 3983404 and German Offenlegungsschriften 1805182 to 1805199. Some of these disclose the use of an aminoplast as curing agent for the specific polyesters disclosed, but there is no teaching or the use of such compositions for coating metal fasteners.

U.S. Patent 2071685 discloses metal fasteners coated with polyesters (produced from glycerol and phthalic acid) to improve the frictional engagement thereof; there is no disclosure or suggestion that a cross-linking agent should be included in the polyester coating.

According to the present invention, there is provided a method of manufacturing a corrosion-resistant impact-driven metal fastener having a metallic corrosion-resistant coating thereon, which comprises at least partially overcoating the metallic corrosion-resistant coating with a coating composition comprising

(i) an oil-free polyester consisting of the reaction product of at least one polyol (which is pentaerythritol, trimethylolpropane, glycerol, ethylene glycol, triethylene glycol, neopentyl glycol, trimethylolethane, 1,2 hexane diol and/or 1,3 butene diol) with at least one dibasic organic acid (phthalic acid, isophthalic acid, maleic acid, adipic acid, succinic acid, sebacic acid and/or fumaric acid), and

(ii) as curing agent for the polyester, a melamine-formaldehyde and/or urea-formaldehyde resin or condensate, present in an amount of 10 to 25% based on the weight of the reaction product plus curing agent.

The overcoating thus produced has good physical properties including toughness, resilience, and resistance to organic solvents, strong acids and bases, weathering and ageing, and serves to protect the fastener on impact.

The fastener can be completely encapsulated with the polyester overcoating (for example, by immersion dipping) or the fastener can be coated with the polyester over any portion which encounters a corrosive environment in use. For example, only the penetrating end or the penetrating end and shank may be coated to protect the fastener from a corrosive substrate, or it may be necessary to coat only the impacted end of the fastener to a depth which might be expected to protrude from a fastened workpiece.

The polyester reaction product used in the coating composition is, as previously mentioned, oil-free; that is, it does not contain a fatty acid (or derivative thereof) having 8 to 22 carbon atoms, as we have found that the use of such a fatty acid in the coating composition would not provide a continuous corrosion-resistant coating with sufficient toughness and resiliency to provide satisfactory impact protection.

The polyester used according to the invention may be produced conventionally, for example, by dissolving, mixing or suspending the polyol and the dibasic acid in a suitable liquid medium at a polymerisation temperature of 100°C to 182°C for a period of 2 to 8 hours. The polyester is generally dissolved or suspended in a suitable solvent to provide a coating composition having the polyester in an amount of 20—40% by weight and including the curing agent in an amount in the range of 3—10% by weight of the coating composition.

The coating composition may also contain additives and modifiers such as clay, calcium carbonate, amorphous silica, diatomaceous earth, magnesium-calcium silicate, cellulose acetate butyrate, carboxymethyl cellulose, and magnesium silicate in an amount in the range of from 1% to 15% based on the total weight of the coating composition. Suitable solvents for the coating composition include 2-butanone, isopropyl alcohol, isobutylacetate, methylisobutylketone, toluene, xylene, and methylene chloride. The solvent is generally included in the coating composition in an amount in the range of 30—80% by weight of total polyester coating composition.

The polyester coating composition preferably further includes chromate salts, such as zinc chromate, to provide added corrosion resistance and can include various dyes and pigments to impart colour for decorative or identification purposes. The solvent and modifiers are generally added to provide a coating composition having a viscosity in the range of 10 seconds to 30 seconds as measured by a No. 2 Zahn cup (such a viscosity generally enables sufficient coverage and coating thickness to be obtained). The polyester coating composition can be applied in more than one application, if desired, so that less viscous polyester coating compositions can be used in the top coating.

Curing of the composition is effected after the composition is applied as a fastener top coating by heating the polyester in contact with the curing agent at a temperature in the range of about 260 to 288°C for a period of one to two minutes. Alternatively, lower temperatures can be used with longer reaction times. For example, the coating composition can be heated for 10 minutes at a temperature of 204°C, 15 minutes at 191°C, or 20 minutes at 182°C.

In accordance with the present invention, the curing agent is included in the polyester coating composition in an amount of 10—25%, based on the total weight of polyester plus curing agent. If more than about 25% curing agent is present in the composition, an excessive amount of curing may occur (this would result in a brittle polyester coating which would not withstand the impact necessary to drive a fastener into a workpiece), while if less than about 10% curing agent is present, the resulting coating may not be sufficiently resistant to solvents and chemicals to provide the required corrosion resistance.

The weight average molecular weight of the cured polyester is preferably in the range of $4 \times 10^3$ to $1.8 \times 10^4$ and the number average molecular weight of the polyester is preferably in the range of $1.25 \times 10^3$ to 2.75 to $10^3$; such cured or cross-linked polyesters provide the required toughness and flexibility required for the purpose of fastener coating so that the fastener can be substantially impacted when driven into place while maintaining its corrosion resistance over a long useful life.

As mentioned above, the fastener (which is preferably of ferrous metal) has a metallic corrosion-resistant coating (preferably of zinc) prior to application of the polyester coating composition. The polyester coating compositions adhere very well to fasteners which have been previously "Dacrotized" in accordance with a method disclosed in United States Patents 3,671,331; 3,687,738; 3,907,608 or 4,020,220. In accordance with this embodiment of the present invention, the fastener is first undercoated with pulverulent zinc, manganese, aluminium, magnesium and/or mixtures or alloys thereof, preferably in a liquid medium containing a hexavalent chromium-providing substance and a reducing agent therefor; the pulverulent metal is preferably present in an amount of 200 to 1000 grams per litre of liquid medium and the weight ratio of chromium (expressed as $CrO_3$) to pulverulent metal is preferably at least 0.08:1, more preferably up to 0.4:1.

The metal is preferably pulverized to a flake or powder, or both, to a size such that all the particles are smaller than 149 microns and a major amount (preferably at least 80% by weight) are smaller than 44 microns.

The pulverulent metal can be applied either dry or as a dispersion in liquid medium and can be applied to the metal fastener by any conventional method for coating a substrate with a liquid, for example, dip coating, roller coating or reverse roller coating, curtain coating, airless spray, rotary brush coating, pressure spray, or combinations of such techniques. For usual spray applications, the concentration of pulverulent metal dispersions, for a dense metal such as zinc, should not exceed about 500 grams per litre. The pulverulent metal should be applied to the substrate in an amount sufficient to provide corrosion resistance; a preferred amount is in the range 120.8 to 204.4 mg per square metre.

The pulverulent metal-containing composition preferably contains not more than 5% by weight of dispersing agents, suspending agents, wetting agents and extending agents.

Laboratory evaluations were made of ferrous nail samples power driven into lumber substrate workpieces and the nail samples were exposed to ASTM B117 Salt Spray testing for the number of hours indicated in the accompanying tables below. Table I below compares "Dacrotized" nails without the polyester treatment of the present invention to nails electrogalvanize zinc plated and chromate dipped; and mechanically zinc plated and chromate dipped. The test results indicated in Table II were obtained by testing similar three types of corrosion-resistant nails as were used for the Table I series. Corrosion resistance failure in the test procedure is taken as the first appearance of red rust of the nail substrate (steel).

As the test results indicate, the presence of the polyester coating of the present invention very significantly improved the corrosion resistance of the "Dacrotized" nails under conditions of the ASTM B117 Salt Spray test.

TABLE I

ASTM B117 Salt Spray test evaluation "Dacrotized" nails versus electrogalvanized and mechanically plated zinc clad chromated nails

| Total hours exposure | Percentage of nails with red rust failure | | |
| --- | --- | --- | --- |
| | "Dacrotized" | Electro-galvanized | Mechanically plated |
| 192 | 0% | 0% | 0% |
| 240 | 1% | 0% | 11% |
| 312 | 5% | 0% | 25% |
| 336 | 5% | 2% | 25% |
| 384 | 5% | 8% | 31% |
| 480 | 17% | 22% | 44% |
| 576 | 21% | 39% | 50% |
| 648 | 31% | 50% | 56% |
| 742 | 31% | 50% | 56% |
| 888 | 71% | 92% | 72% |
| 984 | 74% | 92% | 78% |

TABLE II

ASTM B117 Salt Spray test evaluation of polyester coated "Dacrotized" nails versus electrogalvanized and mechanically plated zinc clad chromated nails

| Total hours exposure | Percentage of nails with red rust failure | | |
| --- | --- | --- | --- |
| | Polyester coated "Dacrotized" | Electro-galvanized | Mechanically plated |
| 240 | 0% | 5% | 25% |
| 480 | 0% | 32% | 38% |
| 624 | 0% | 78% | 50% |
| 792 | 0% | 100% | 50% |
| 1008 | 2% | 100% | 50% |

## Claims

1. A method of manufacturing a corrosion-resistant impact-driven metal fastener wherein said fastener is first provided with a metallic corrosion-resistant coating, characterised in that said metallic corrosion-resistant coating is at least partially overcoated with a polymer coating composition comprising (i) an oil-free polyester consisting of the reaction product of at least one polyol selected from pentaerythritol, trimethylolpropane, glycerol, ethylene glycol, triethylene glycol, neopentyl glycol, trimethylolethane, 1,2-hexanediol and 1,3-butenediol with at least one dibasic organic acid selected from phthalic acid, isophthalic acid, maleic acid, adipic acid, succinic acid, sebacic acid and fumaric acid, and (ii) as curing agent for the polyester, a melamine-formaldehyde and/or urea-formaldehyde resin or condensate, present in an amount of 10 to 25% based on the weight of said reaction product plus curing agent.

2. A method according to claim 1, characterised in that said metallic corrosion-resistant coating is of zinc.

3. A method according to claim 1, characterised in that said metallic corrosion-resistant coating results from application of an undercoating composition comprising at least one pulverulent metal selected from zinc, manganese, aluminium and magnesium, or a mixture or alloy thereof.

4. A method according to claim 3, characterised in that said undercoating composition comprises a liquid medium having therein a hexavalent chromium-providing substance, a reducing agent for the latter substance and 200 to 1000 grams, per litre of liquid medium, of said at least one pulverulent metal, in which the weight ratio of chromium, expressed as $CrO_3$, to the pulverulent metal is at least 0.08:1.

5. A method according to any of claims 1 to 4, characterised in that the curing agent is present in an amount of 3 to 10% based on the total weight of the polymer coating composition.

6. A method according to any of claims 1 to 5, characterised in that the resulting cured polyester has a weight average molecular weight of 4000 to 18000 and a number average molecular weight of 1250 to 2750.

7. A method according to any of claims 1 to 6, characterised in that the polymer coating composition contains, as filler, clay, calcium carbonate, amorphous silica, diatomaceous earth, magnesium-calcium silicate, cellulose acetate butyrate, carboxymethyl cellulose or magnesium silicate, the filler being present in an amount of 1 to 15% by weight of the cured coating.

8. A method according to any of claims 1 to 7, characterised in that the polymer coating composition is applied so as to completely encapsulate the fastener.

9. A method according to any of claims 1 to 7, in which the fastener has an end adapted to penetrate an article in use, characterised in that the polymer coating composition is applied so as to coat the penetrating end and/or the driving portion of the fastener.

## Patentansprüche

1. Verfahren zur Herstellung einer korrosionsbeständigen einschlagbaren Befestigung aus Metall, wobei die Befestigung zunächst mit einem metallischen, korrosionsbeständigen Überzug versehen wird, dadurch gekennzeichnet, daß der metallische, korrosionsbeständige Überzug mindestens teilweise mit einer polymeren Überzugsmasse überzogen wird, die (1) einen ölfreien Polyester, bestehend aus dem Reaktionsprodukt aus mindestens einem Polyol, ausgewählt aus Pentaerythrit, Trimethylolpropan, Glycerin, Ethylenglykol, Triethylenglykol, Neopentylglykol, Trimethylolethan, 1,2-Hexandiol und 1,3-Butendiol und mindestens einer zweibasischen organischen Säure, ausgewählt aus Phthalsäure, Isophthalsäure, Maleinsäure, Adipinsäure, Bernsteinsäure, Sebacinsäure und Fumarsäure und (2) ein Härtungsmittel für den Polyester, ein Melamin-Formaldehyd- und/oder Harnstoff-Formaldehyd-Harz oder -kondensat, das in einer Menge von 10 bis 25 %, bezogen auf das Gewicht des Reaktionsproduktes und des Härtungsmittels, vorhanden ist, enthält.

2. Verfahren nach Anspruch 1, dadurch gekennzeichnet, daß der metallische, korrosionsbeständige Überzug aus Zink ist.

3. Verfahren nach Anspruch 1, dadurch gekennzeichnet, daß der metallische, korrosionsbeständige Überzug durch Aufbringen einer Grundiermasse, die mindestens ein pulverförmiges Metall, ausgewählt aus Zink, Mangan, Aluminium und Magnesium oder einem Gemisch oder einer Legierung hiervon enthält, erhalten worden ist.

4. Verfahren nach Anspruch 3, dadurch gekennzeichnet, daß die Grundiermasse ein flüssiges Medium darstellt, welches eine Substanz, die sechswertiges Chrom zur Verfügung stellt, ein Reduktionsmittel für die zuletzt genannte Substanz und 200 bis 1000 g mindestens eines pulverförmigen Metalls je Liter flüssiges Medium enthält, wobei das Gewichtsverhältnis zwischen Chrom, ausgedrückt als $CrO_3$, und pulverförmigem Metall mindestens 0,08:1 beträgt.

5. Verfahren nach einem der Ansprüche 1 bis 4, dadurch gekennzeichnet, daß das Härtungsmittel in einer Menge von 3 bis 10 %, bezogen auf das Gesamtgewicht der polymeren Überzugsmasse, vorhanden ist.

6. Verfahren nach einem der Ansprüche 1 bis 5, dadurch gekennzeichnet, daß der erhaltene ausgehärtete Polyester ein gewichtetes durchschnittliches Molekulargewicht von 4000 bis 18 000 und ein numerisches durchschnittliches Molekulargewicht von 1250 bis 2750 hat.

7. Verfahren nach einem der Ansprüche 1 bis 6, dadurch gekennzeichnet, daß die polymere Überzugsmasse als Füllstoff Ton, Calciumcarbonat, amorphe Kieselsäure, Diatomeenerde, Magnesium-Calcium-Silicat, Celluloseacetat-Butyrat, Carboxymethylcellulose oder Magnesiumsilicat enthält, wobei der Füllstoff in einer Menge von 1 bis 15 Gew.-% des ausgehärteten Überzugs vorhanden ist.

8. Verfahren nach einem der Ansprüche 1 bis 7, dadurch gekennzeichnet, daß die polymere Überzugsmasse so aufgebracht wird, daß der Befestiger vollständig engekapselt wird.

9. Verfahren nach einem der Ansprüche 1 bis 7, wobei der Befestiger ein Ende hat, das geeignet ist, bei Gebrauch in einen Gegenstand einzudringen, dadurch gekennzeichnet, daß die polymere Überzugsmasse so aufgebracht wird, daß sie das eindringende Ende und/oder den beaufschlagten Teil des Befestigers überzieht.

## Revendications

1. Procédé pour la fabrication d'attaches métalliques, résistantes à la corrosion, enfoncées par impact, dans lequel l'attache est d'abord pourvue d'un revêtement métallique résistant à la corrosion, caractérisé en ce que ce revêtement métallique résistant à la corrosion est, au moins partiellement, recouvert lui-même d'une composition polymère de revêtement comprenant (i) un polyester exempt d'huile, constitué par le produit de la réaction d'au moins un polyol choisi parmi les pentaérythritol, triméthylolpropane, glycérol, éthylèneglycol, triéthylèneglycol, néopentylglycol, triméthyloléthane, 1,2-hexanediol et 1,3-butènediol, avec au moins un acide organique dibasique choisi parmi les acides phtalique, isophtalique, maléique, adipique, succinique, sébacique et fumarique, et (ii), comme agent durcisseur pour le polyester, une résine ou un condensat mélamine-formol et/ou urée-formol, présent dans une proportion de 10 à 25 %, basée sur le poids des produits introduits dans la réaction, produit et agent durcisseur.

2. Procédé suivant la revendication 1, caractérisé en ce que le revêtement métallique résistant à la corrosion est du zinc.

3. Procédé suivant la revendication 1, caractérisé en ce que le revêtement métallique résistant à la corrosion a été obtenu par l'application d'une couche de fond comprenant au moins un métal pulvérulent choisi parmi les zinc, manganèse, aluminium, magnésium ou un mélange ou un alliage des précédents.

4. Procédé suivant la revendication 3, caractérisé en ce que la composition formant la couche de fond comprend un agent liquide contenant une substance fournissant du chrome hexavalent, un agent réducteur pour cette dernière substance et 200 à 1000 g par litre d'agent liquide, d'au moins un métal pulvérulent mentionné, le rapport en poids entre le chrome, exprimé en $CrO_3$, et le métal pulvérulent étant d'au moins 0,08:1.

5. Procédé suivant l'une quelconque des revendications 1 à 4, caractérisé en ce que l'agent durcisseur est présent dans une proportion de 3 à 10 % basée sur le poids total de la composition de revêtement polymère.

6. Procédé suivant l'une quelconque des revendications 1 à 5, caractérisé en ce que le polyester polymérisé résultant présente un poids moléculaire moyen de 4000 à 18000 en poids, et en nombre, un poids moléculaire moyen de 1250 à 2750.

7. Procédé suivant l'une quelconque des revendications 1 à 6, caractérisé en ce que la composition polymère de revêtement contient, comme charge du kaolin, carbonate de calcium, silice amorphe, kieselguhr, silicate de magnésium-calcium, acéto-butyrate de cellulose, carboxyméthylcellulose, ou silicate de magnésium, cette charge étant présente dans une proportion de 1 à 15 % en poids du revêtement polymérisé.

8. Procédé suivant l'une quelconque des revendications 1 à 7, caractérisé en ce que la composition polymère de revêtement est appliquée de façon à encapsuler complètement l'attache.

9. Procédé suivant l'une quelconque des revendications 1 à 7, dans lequel l'attache possède une extrémité adaptée pour pénétrer dans l'objet en usage, caractérisé en ce que la composition polymère de revêtement est appliquée de façon à revêtir l'extrémité de pénétration et/ou la partie qui s'enfonce de l'attache.